# EUROPEAN PATENT SPECIFICATION

(11) **EP 2 311 170 B1**
(45) Date of publication and mention of the grant of the patent: **26.09.2012**
(21) Application number: 09784885.7
(22) Date of filing: 07.08.2009
(51) Int. Cl.: H02J 7/35

(54) **COMMUNICATION DEVICE CHARGER**
KOMMUNIKATIONSEINRICHTUNGS-LADEVORRICHTUNG
CHARGEUR DE DISPOSITIF DE COMMUNICATION

(30) Priority: 07.08.2008 GB 0814454
(43) Date of publication of application: 20.04.2011
(60) Divisional application: 12180941.2
(73) Proprietor: MI Suny Limited, Verwood, Dorset BH31 6BA (GB)
(72) Inventor: ALDERMAN, Dean, Southampton SO19 2FD (GB)
(74) Representative: Brooks, Nigel Samuel
(86) International application number: PCT/GB2009/001939
(87) International publication number: WO 2010/015832

(56) References cited:
- WO-A2-2006/012871
- FR-A1- 2 754 666
- GB-A- 2 312 999
- US-A- 6 084 379
- US-A1- 2003 128 010

## Description

The present invention relates to a communication device charger, in particular for charging a mobile telephone.

Mobile telephones and the like have a battery life of a small number of days.

Normally, they are re-charged by plugging them into a mains driven transformer/rectifier. This is at once inconvenient and wasteful (the transformer is liable to remain plugged in permanently).

Other chargers are those driven from automobile electrics and solar power chargers. Again these involve physical plugging in and wired connection during charging.

US 6,084,379 describes a solar powered recharging device for a personal communication device comprising:
- a body having side and an end formations engageable with the casing of the personal communication device for fitting of the charger to the device:
- the side formations adapted to slide up the side edges of the casing of the personal communication device beside its key pad until stopped by an end one of the formations,
- a connector complementary to the charging point of the device for providing charge from the charger to the device when the former is fitted to the latter, the connector being carried on the end formation, with the connector and the charging point connecting when the sliding of the personal communication device is stopped by the end formation and
- an array of photo-voltaic cells arranged on an outer surface of the body.

The object of the present invention is to provide an improved charger for a mobile telephone and the like.

According to the invention there is provided A light powered charger adapted to be fitted to a mobile communication device having a casing with key pad (of either the physical key or touch pad key type), a battery and a charging point, the charger comprising:
- a body having side and an end formations engageable with the casing of the mobile device for fitting of the charger to the device:
- the side formations being grips adapted to slide up the side edges of the casing of the mobile device beside its key pad until stopped by an end one of the formations,
- a connector complementary to the charging point of the device for providing charge from the charger to the device when the former is fitted to the latter, the connector being carried on the end formation, with the connector and the charging point connecting when the sliding of the mobile device is stopped by the end formation and
- an array of photo-voltaic cells arranged on an outer surface of the body, characterised in that the charger includes:
- an internal battery in the body of the charger, the charging circuit being adapted to charge the internal battery from the photo-voltaic cell or array thereof and to charge the battery of the communication device from the internal battery,
- a charging circuit for passing charge from the photo-voltaic cell array to the battery of the communication device or the internal battery or from the internal battery to the battery of the mobile device and
- an auxiliary power supply connector, connected for charging the internal battery.

The array of photo-voltaic cells may be provided only on a single face of the charger, typically an outer face corresponding to a back face of the communication device. Alternatively, they can extend onto other faces as well, including side faces.

Equally, it can be envisaged that device casing can be inserted to engage its charging point with the connector, the casing and the body then being pivoted together with a body clip engaging with an edge of the body remote from the connector.

Where fitting of the charger obscures additional electrical points in the telephone, such as for a remote microphone and ear-piece, these can be replicated on the casing, with the suitable contacts being made from the originals to the replicas typically alongside the charging connection.

In a first embodiment, the body is so formed, with recesses and/or apertures as required, to allow the communication device to be used with the charger fitted.

Normally mobile telephones are placed on a desk or the like with their key pads and displays upper most, for easy in identifying a caller. With the charger fitted such use would not expose most of the photo-voltaic area to incident light. To provide for this, the body can be shaped so that the telephone stands up, possibly with collapsible legs. Alternatively, a stand may be provided, conveniently with a reflective surface for reflecting light onto the photo-voltaic area.

Preferably:
- the charging circuit includes means for detecting the voltage of the internal battery and passing charge therefrom only if the voltage exceeds a threshold voltage;
- the charging circuit includes means for raising the voltage of the internal battery for application to the battery of the communication device at an increased level;
- the charger includes a switch for testing charge state of the internal battery and an indicator thereof; and
- the charger includes an auxiliary power supply connector, connected for charging the internal battery.

To help understanding of the invention, two specific embodiments thereof will now be described by way of example and with reference to the accompanying drawings, in which:

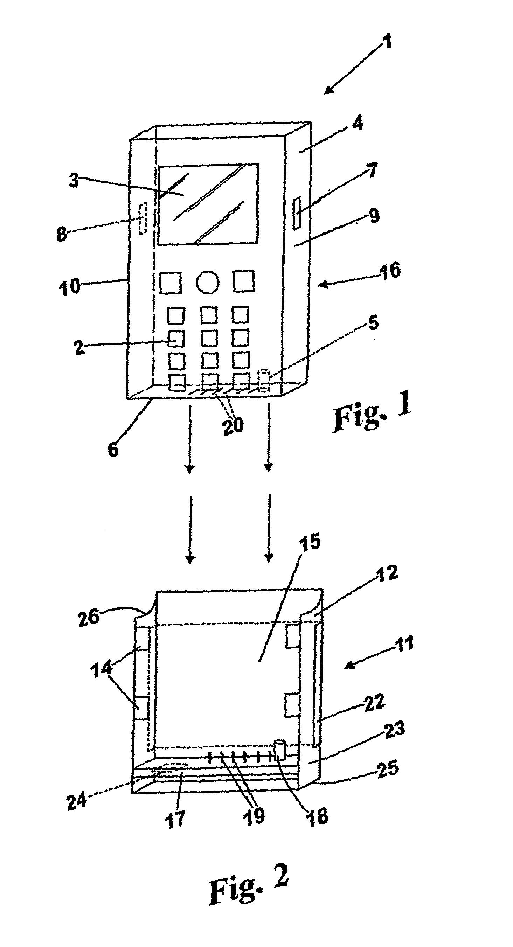

Figure 1 is a perspective view of a mobile telephone;
Figure 2 is a similar perspective vie w of a charger of the invention for the telephone;

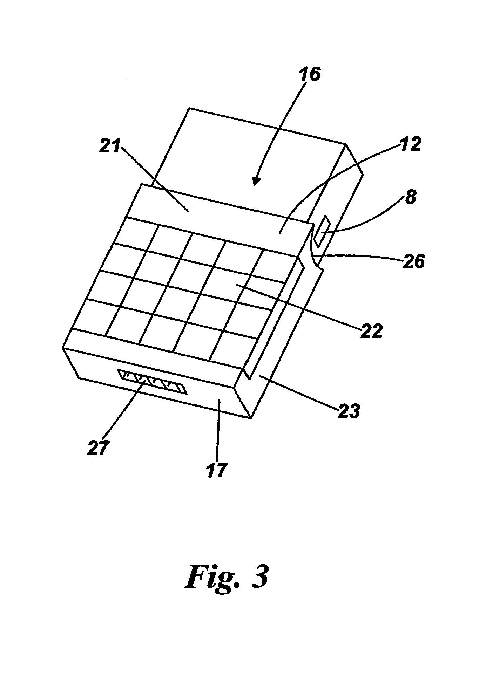

Figure 3 is a rear perspective view of the telephone and charger in combination;
Figure 4 is a view similar to Figure 2 of a second embodiment of a charger in accordance with the invention;
Figure 5 is a similar view of a mob i le communication device to be charged by the charger of Figure 4;
Figure 6 is a block diagram of circuitry of the charger of the second embodiment;
Figure 7 is a circuit diagram of part of the circuitry; and
Figure 8 is a circuit diagram of the rest of the circuitry.

Referring to the drawings, a mobile telephone 1 has a key pad 2 and a display 3 mounted on a casing 4, with a charging point 5 provided at a bottom edge 6 of the case, together with volume control and camera operation buttons 7,8 on opposite side edges 9,10 of the casing 4,

A photo-voltaic charger 11 has a body 12 with grips 14 extending from a central region 15. This region is complementary with a back face 16 of the telephone. The grips are complementary with the side edges of the telephone. In an end wall 17 of the body, a charging connector 18 and additional contacts 19 are provided, the latter being complementary to additional points 20 on the telephone. The charger is engaged with the telephone by sliding the one along the other, with the grips 14 engaging the casing at the edges 9,10 of the casing. The sliding is stopped by abutment of the end wall 17 with the bottom edge 6 with the connector 18 engaging the charging point 5 and the additional contacts engaging the additional points 20.

The outside surface 21 of the charger body, that is the outside of the central region is substantially covered in an array of photo-voltaic cells 22, which curve onto the sides 23 having grips 14. The cells are connected to a management circuit 24, whose output is connected to the charging connector 18.

For use, the array needs to receive sun light or at least strong light. The telephone can be placed face down or can be stood up on end on a foot 25 provided on the end wall 17. Thus the telephone can be continuously charged when exposed to sun light.

The charger can remain on the telephone whilst the latter is in use to make a call. In case the side buttons 7,8 are to be used, the side 23 of the charger body 12 are cut away 26 in the region of the buttons. In case the additional points 20 are to be used, counterparts 27 are provided on the end wall for a connection lead (not shown).

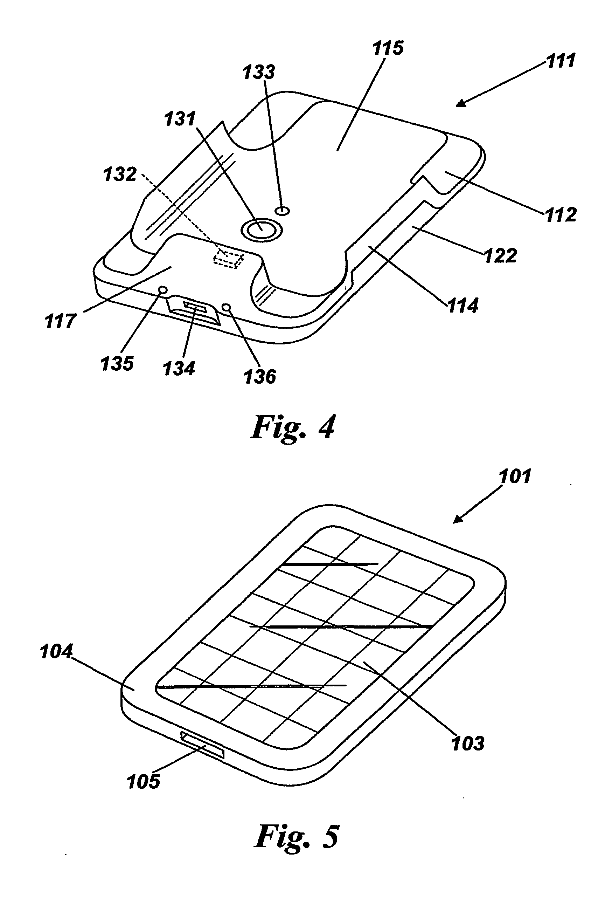

Turning now to Figure 4, thereshown is a second photo-voltaic charger 111 of the invention. It has a body 112, with a concave central region 115 rising to overhanging grips 114. At one end it has a stop 117 against which a mobile communication device 101 of the type able to access the internet and having a touch screen 103, performing both of the functions of a display and a keyboard. It has a casing 104 with a data and power port 105 at one end.

The charger has an internal battery 130 (not shown as such in Figure 4) for charging a battery of the communication device. In the centre of the concave region, the charger has a push button 131 for testing the state of state of charge of the internal battery, before the communication device is slid into position between the grips 114 and against the stop 117, which action brings port 105 into contact with a complementary connector 132. Adjacent the push button is an LED 133, which lights if the battery is sufficiently charged to charge the device.

On the face opposite from the concave central region, the charger has a photo-voltaic panel 122, which is wrapped around onto the grips 114. Opposite from the connector 132, the stop 117 carries a USB port 134 and a pair of LEDs 135,136. The first illuminates if the charger's battery is being charged by the photo-voltaic panel and the second when it is being charged via the USB port.

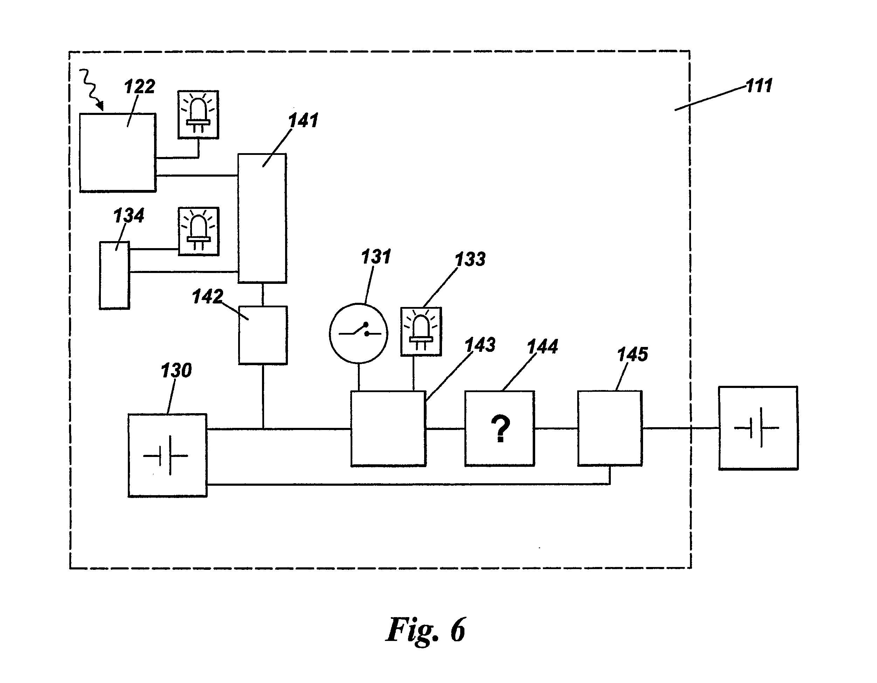

Turning on to Figure 6, internal circuitry of the charger includes a power separation circuit 141 to which the photo-voltaic panel 122 and the power contacts of the USB port 134 are connected, in a manner to connect either or these to a charging control circuit 142. The separation circuit isolates the panel 122 and the port 134 from each other to avoid undesirable effects of their direct inter-connection. The charging control circuit is connected to the battery 130 for its charging until its voltage reaches 4.2 volts, the voltage being measured by a separate voltage sensing circuit 143. The battery test button 131 and the battery charge indicating LED 133 are connected to the sensing circuit, for indicating whether the internal battery is charged above 3.0 volts below which voltage it will not be connected to charge the battery of the communication device. A detection circuit 144 detects the presence of a communication device in the charger and switches on a voltage boost circuit 145, which receives power from the battery 130 and passes it at a suitable voltage to the battery of the internal communication device for its charging.

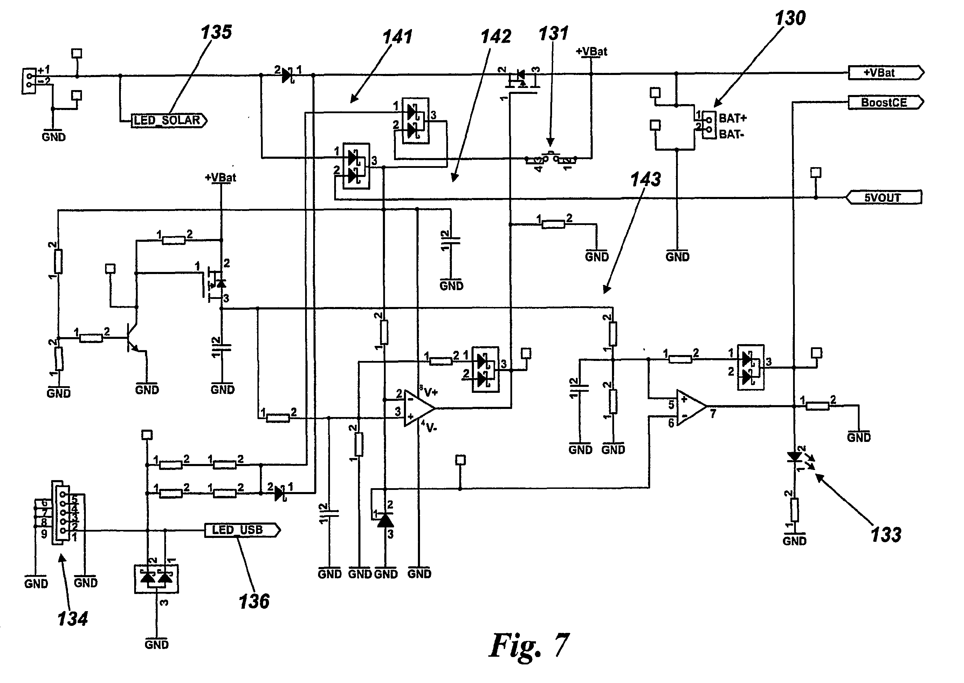

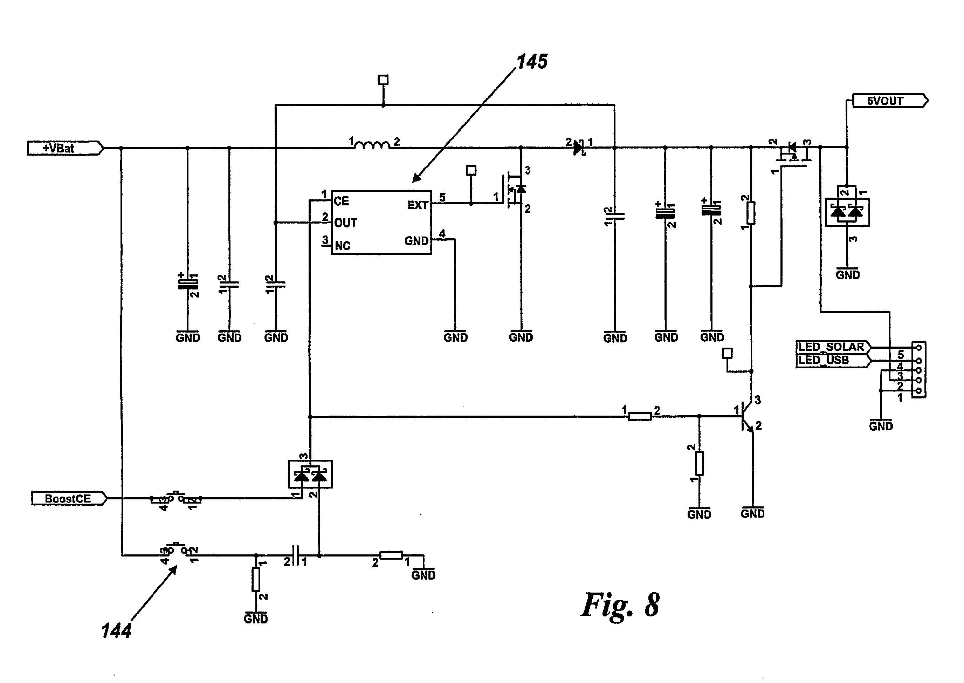

In Figures 7 & 8, which are circuit diagrams, implementation of the above circuits is shown. Certain of the above components and circuits are identified by their reference numerals. It is believed that the skilled reader will be able to understand the circuit diagrams without further description.

It should be noted that the USB voltage lines of the port 134 are not connected directly to the mobile communication device.

## Claims

1. A light powered charger (11) adapted to be fitted to a mobile communication device (1) having a casing (4) with key pad (2) (of either the physical key or touch pad key type), a battery and a charging point, the charger comprising:
• a body (12) having side and an end formations engageable with the casing of the mobile device for fitting of the charger to the device:
• the side formations being grips (14) adapted to slide up the side edges (23) of the casing of the mobile device beside its key pad until stopped by an end one of the formations (17),
• a connector (18) complementary to the charging point of the device for providing charge from the charger to the device when the former is fitted to the latter, the connector being carried on the end formation, with the connector and the charging point connecting when the sliding of the mobile device is stopped by the end formation and
• an array of photo-voltaic cells (22) arranged on an outer surface of the body,
**characterised in that** the charger includes:
• an internal battery (130) in the body of the charger, the charging circuit being adapted to charge the internal battery from the photo-voltaic cell or array thereof and to charge the battery of the communication device from the internal battery,
• a charging circuit (24) for passing charge from the photo-voltaic cell array to the battery of the communication device or the internal battery or from the internal battery to the battery of the mobile device and
• an auxiliary power supply connector (132), connected for charging the internal battery.

2. A light powered charger as claimed in claim 1, wherein the photo-voltaic cell array is provided only on a single face of the charger, preferably an outer face corresponding to a back face of the communication device.

3. A light powered charger as claimed in claim 1 or claim 2, wherein the photo-voltaic cell array extends onto at least two faces of the body, preferably a face corresponding to back face of the communication device and one or more side faces.

4. A light powered charger as claimed in claim 1, claim 2 or claim 3, including connectors (134) replicating connectors (105) of the mobile communication device obscured by fitting of the charger.

5. A light powered charger as claimed in any preceding claim, including recesses and/or apertures as required (134), to allow the communication device to be used with the charger fitted,

6. A light powered charger as claimed in any preceding claim, wherein the body is shaped to stand up the communication device during charging.

7. A light powered charger as claimed in any preceding claim, including legs (25) for standing up the communication device during charging.

8. A light powered charger as claimed in claim 6 or claim 7, a reflective surface for reflecting light onto the photo-voltaic area.

9. A Light powered charger as claimed in any preceding claim, wherein the charging circuit includes means for detecting the voltage of the internal battery and passing charge therefrom only if the voltage exceeds a threshold voltage (144, 145).

10. A light powered charger as claimed in any preceding claim, wherein the charging circuit includes means for raising the voltage of the internal battery for application to the battery of the communication device at an increased level.

11. A light powered charger as claimed in any preceding claim, including a switch (131) for testing charge state of the internal battery and an indicator (133) thereof.

## Patentansprüche

1. Lichtbetriebene Ladevorrichtung (11) zum Anschluss an einer mobilen Kommunikationseinrichtung (1), welche ein Gehäuse (4) mit einer Tastatur (2), wobei die Tasten mechanisch oder in Form von Touch-Pad Tasten ausgebildet sein könren, sowie einen Akku und einen Ladeanschluss aufweist, wobei die Ladevorrichtung aufweist:
• ein Hauptteil (12) mit Seiten- und Endteilen, die mit dem Gehäuse der mobilen Einrichtung in Zusammenwirkung bringbar sind, um die Ladevorrichtung an der Einrichtung anzubringen; wobei
• die Seitenteile Griffelemente (14) bilden, die engtlang der Seitenflächen (23) des Gehäuses der mobilen Einrichtung neben deren Tastatur verschiebbar sind, bis die Verschiebung durch ein Endteil (17) begrenzt wird,
• einen komplementär zu dem Ladeanschluss der Einrichtung ausgebildeten Konnektor (18), um einen Ladestrom von der Ladevorrichtung zu der Einrichtung zu ermöglichen, wenn beide miteinander verbunden sind, wobei der Konnektor an dem Endteil angeordnet ist und der Konnektor und der Ladeanachluß miteinander in Verbindung sind, wenn die Schiebebewegung der mobilen Einrichtung durch das Endteil gestoppt wird, und
• eine Anordnung von photovoltaischen Zellen (22), die an einer Außenseite des Hauptteils angeordnet sind,
**dadurch gekennzeichnet, dass** die Ladevorrichtung aufweist:
• einen internen Akku (130) im Hauptteil der Ladevorrichtung, wobei der Ladeschaltkreis so ausgestaltet ist, dass der interne Akku mittels der photovoltaischen Zelle bzw. Zellenanordnung und der Akku der Kommunikationseinrichtung von dem internen Akku ladbar sind,
• einen Ladeschaltkreis (24) zum Zuführen eines Ladestroms von der Anordnung der photovoltaischen Zellen zu dem Akku der Kommunikationseinrichtung oder dem internen Akku oder von dem internen Akku zu dem Akku der mobilen Einrichtung, und
• einen Hilfsstromanschluss (132) zum Laden des internen Akkus.

2. Lichtbetriebene Ladevorrichtung nach Anspruch 1, **dadurch gekennzeichnet, dass** die Anordnung photovoltaischer Zellen lediglich an einer Seite der Ladevorrichtung angeordnet ist, vorzugsweise an einer Außenseite, die einer Rückseite der Kommunikationseinrichtung zugeordnet ist.

3. Lichtbetriebene Ladevorrichtung nach Anspruch 1 oder 2, **dadurch gekennzeichnet, dass** die Anordnung photovoltaischer Zellen sich über wenigstens zwei Seiten der Ladevorrichtung erstreckt, vorzugsweise an einer Seite, die einer Rückseite der Kommunikationseinrichtung zugeordnet ist und an einer oder mehreren der Seitenflächen.

4. Lichtbetriebene Ladevorrichtung nach Anspruch 1, Anspruch 2 oder Anspruch 3, **gekennzeichnet durch** Anschlüsse (134) zur Replikation von an der mobilen Kommunikationseinrichtung ausgebildeten Anschlüssen (105), welche **durch** das Montieren der Ladevorrichtung verdeckt sind.

5. Lichtbetriebene Ladevorrichtung nach einem der vorstehenden Ansprüche, **gekennzeichnet durch** bei Bedarf vorgesehene Aussparungen und/oder Öffnungen (134), die einen Gebrauch der Kommunikationseinrichtung mit montierter Ladevorrichtung erlauben.

6. Lichtbetriebene Ladevorrichtung nach einem der vorstehenden Ansprüche, **dadurch gekennzeichnet, dass** das Hauptteil so ausgestaltet ist, dass die Kommunikationseinrichtung während des Ladevorgangs aufrecht halterbar ist.

7. Lichtbetriebene Ladevorrichtung nach einem der vorstehenden Ansprüche, **gekennzeichnet durch** Fußelemente (25) zum aufrechten Halten der Kommunikationseinrichtung während des Ladevorgangs.

8. Lichtbetriebene Ladevorrichtung nach Anspruch 6 oder 7, **gekennzeichnet durch** eine reflektierende Fläche zum Reflektieren von Licht auf den Photovoltaik-Bereich.

9. Lichtbetriebene Ladevorrichtung nach einem der vorstehenden Ansprüche, **dadurch gekennzeichnet, dass** der Ladeschaltkreis Mittel zum Feststellen der Spannung des internen Akkus aufweist sowie Mittel, um einen Ladestrom von diesem nur dann freizugeben, wenn die Spannung höher ist als eine Grenzspannung (144, 145).

10. Lichtbetriebene Ladevorrichtung nach einem der vorstehenden Ansprüche, **dadurch gekennzeichnet, dass** der Ladeschaltkreis Mittel zum Anheben der Spannung des internen Akkus aufweist, zur Zufuhr an den Akku der Kommunikationseinrichtung mit erhöhtem Niveau.

11. Lichtbetriebene Ladevorrichtung nach einem der vorstehenden Ansprüche, **gekennzeichnet durch** einen Schalter (131) zum Testen des Ladungsstatus des internen Akkus sowie eine zugehörige Anzeige (133).

## Revendications

1. Un chargeur alimenté par la lumière (11) apte à être monté sur un dispositif de communication mobile (1) possédant un boîtier (4) avec un clavier (2) (du type à clavier physique ou bien à clavier tactile), une batterie et un point de charge, le chargeur comprenant :
• un corps (12) possédant des formations latérales et une formation d'extrémité pouvant venir en prise avec le boîtier du dispositif mobile pour le montage du chargeur sur le dispositif :
• les formations latérales étant des pinces (14) aptes à monter en coulissant sur les bords latéraux (23) du boîtier du dispositif mobile à côté de son clavier jusqu'à ce qu'elles soient stoppées par une formation d'extrémité des formations (17),
• un connecteur (18) complémentaire du point de charge du dispositif pour fournir la charge depuis le chargeur vers le dispositif lorsque celui-là est monté sur celui-ci, le connecteur étant supporté par la formation d'extrémité, le connecteur et le point de charge se connectant lorsque le coulissement du dispositif mobile est stoppé par la formation d'extrémité, et
• un réseau de cellules photovoltaïques (22) disposé sur une surface extérieure du corps,
**caractérisé en ce que** le chargeur comprend :
• une batterie interne (130) dans le corps du chargeur, le circuit de charge étant apte à charger la batterie interne à partir des cellules photovoltaïques ou du réseau de celles-ci et à charger la batterie du dispositif de communication à partir de la batterie interne,
• un circuit de charge (24) pour transférer la charge depuis le réseau de cellules photovoltaïques vers la batterie du dispositif de communication ou vers la batterie interne ou depuis la batterie interne vers la batterie du dispositif mobile, et
• un connecteur d'alimentation de puissance auxiliaire (132), connecté pour charger la batterie interne.

2. Un chargeur alimenté par la lumière selon la revendication 1, dans lequel le réseau de cellules photovoltaïques n'est disposé que sur une seule face du chargeur, de préférence une face externe correspondant à une face dorsale du dispositif de communication.

3. Un chargeur alimenté par la lumière selon la revendication 1 ou la revendication 2, dans lequel le réseau de cellules photovoltaïques s'étend sur au moins deux faces du corps, de préférence une face correspondant à une face dorsale du dispositif de communication et une ou plusieurs faces latérales.

4. Un chargeur alimenté par la lumière selon la revendication 1 ou 2, comprenant des connecteurs (134) répliquant des connecteurs (105) du dispositif de communication mobile occultés par le montage du chargeur.

5. Un chargeur alimenté par la lumière selon l'une des revendications précédentes, comprenant des évidements et/ou des ouvertures en tant que de besoin (134), pour permettre l'utilisation du dispositif de communication avec le chargeur monté dessus.

6. Un chargeur alimenté par la lumière selon l'une des revendications précédentes, dans lequel le corps est conformé pour tenir le dispositif de communication debout durant la charge.

7. Un chargeur alimenté par la lumière selon l'une des revendications précédentes, comprenant des jambages (25) pour tenir le dispositif de communication debout durant la charge.

8. Un chargeur alimenté par la lumière selon la revendication 6 ou la revendication 7, avec une surface réfléchissante pour réfléchir la lumière vers la zone photovoltaïque.

9. Un chargeur alimenté par la lumière selon l'une des revendications précédentes, dans lequel le circuit de charge comprend des moyens pour détecter la tension de la batterie interne et transférer la charge depuis celle-ci seulement si la tension dépasse une tension de seuil (144, 145).

10. Un chargeur alimenté par la lumière selon l'une des revendications précédentes, dans lequel le circuit de charge comprend des moyens pour élever la tension de la batterie interne pour application à la batterie du dispositif de communication à un niveau accru.

11. Un chargeur alimenté par la lumière selon l'une des revendications précédentes, comprenant un commutateur (131) pour tester l'état de charge de la batterie interne et un indicateur (133) de celui-ci.
